# EUROPÄISCHE PATENTANMELDUNG

(11) **EP 1 884 645 A1**
(43) Veröffentlichungstag der Anmeldung: **06.02.2008**
(21) Anmeldenummer: 07009753.0
(22) Anmeldetag: 16.05.2007
(51) Int. Cl.: F02D 41/36, F02D 17/00, F02D 17/02

(54) **Verfahren zum Starten eines Verbrennungsmotors**

(30) Priorität: 26.07.2006 DE 102006034540
(71) Anmelder: Dr.Ing. h.c. F. Porsche Aktiengesellschaft, 70435 Stuttgart (DE)
(72) Erfinder: Moras, Matthias, 18276 Mühl Rosin (DE)

(57) **Zusammenfassung**

Die Erfindung betrifft ein Verfahren zum Starten eines Verbrennungsmotors mit Direkteinspritzung des Kraftstoffs, wobei nach dem Anliegen eines den Startvorgang des Verbrennungsmotors auslösenden Ereignisses und bei Vorliegen mindestens einer vorbestimmten Betriebsbedingung während mindestens eines Zylinder-Arbeitsspiels des Verbrennungsmotors eine Einspritzung in mindestens einen der Zylinder gezielt ausgelassen wird.

## Beschreibung

Die Erfindung betrifft ein Verfahren zum Starten eines Verbrennungsmotors. Des Weiteren betrifft die Erfindung eine Motorsteuerungseinrichtung.

Verbrennungsmotoren von Kraftfahrzeugen müssen unter allen möglichen Betriebsbedingungen nach dem Anliegen eines einen Startvorgang des Verbrennungsmotors auslösenden Ereignisses sicher gestartet werden können, ohne dass die Gefahr besteht, dass der Verbrennungsmotor während des Startvorgangs ausgeht. Bei Verbrennungsmotoren mit Benzin-Direkteinspritzung bereitet dies insbesondere bei niedrigen Umgebungstemperaturen bzw. Betriebstemperaturen Schwierigkeiten. So kann sich während des Startvorgangs eines Verbrennungsmotors mit Benzin-Direkteinspritzung bei niedrigen Umgebungstemperaturen ein starker Abfall des von einem Einspritzsystems bereitgestellten Einspritzdrucks unterhalb eines Druckniveaus einstellen, welches für eine gute Kraftstoffgemischaufbereitung und/oder für die Einbringung der geforderten Kraftstoffmenge im für die Einspritzung zur Verfügung stehenden Zeitfenster erforderlich ist. In diesem Fall kann während des Startvorgangs der Verbrennungsmotor ausgehen. Dies ist von Nachteil.

Hiervon ausgehend liegt der vorliegenden Erfindung das Problem zu Grunde ein Verfahren zum Starten eines Verbrennungsmotors zu schaffen, bei welchem keine Gefahr besteht, dass der Verbrennungsmotor während des Startvorgangs ausgeht. Weiterhin liegt der Erfindung das Problem zu Grunde ein entsprechende Motorsteuerungseinrichtung zu schaffen.

Dieses Problem wird dadurch ein Verfahren zum Starten eines Verbrennungsmotors gemäß Anspruch 1 gelöst.

Erfindungsgemäß wird nach dem Anliegen eines den Startvorgang des Verbrennungsmotors auslösenden Ereignisses und bei Vorliegen mindestens einer vorbestimmten Betriebsbedingung während mindestens eines Zylinder-Arbeitsspiels des Verbrennungsmotors eine Einspritzung in mindestens einen der Zylinder gezielt ausgelassen. Hierdurch kann vermieden werden, dass selbst bei ungünstigen Betriebsbedingungen der Verbrennungsmotor während des Startvorgangs ausgeht.

Im Sinne des erfindungsgemäßen Verfahrens wird dann, wenn mindestens eine vorbestimmte Betriebsbedingung nach dem Anliegen eines den Startvorgang auslösenden Ereignisses vorliegt, zum Starten des Verbrennungsmotors während mindestens eines Zylinder-Arbeitspiels eine Einspritzung in mindestens einen der Zylinder gezielt ausgelassen. Hierdurch kann die Bilanz zwischen eingespritzter und nachgeförderter Kraftstoffmenge während des Startvorgangs verbessert werden, so dass der von einem Einspritzsystem bereitgestellte Einspritzdruck bzw. Kraftstoffdruck selbst unter ungünstigen Betriebsbedingungen nicht so stark abfällt, dass die Gefahr besteht, dass der Verbrennungsmotor während dem Startvorgang ausgeht.

Vorzugsweise wird bei Anliegen des den Startvorgang des Verbrennungsmotors auslösenden Ereignisses und bei Vorliegen der oder jeder vorbestimmten Betriebsbedingung während mindestens zwei hintereinander folgender Zylinder-Arbeitsspiele eine Einspritzung in mindestens einen der Zylinder ausgelassen, wobei hierbei für solche Zylinder, für die während eines Zylinder-Arbeitsspiels eine Einspritzung ausgelassen wird, im sich unmittelbar anschließenden Zylinder-Arbeitsspiel eine Einspritzung vorgenommen wird, und zwar vorzugsweise mit einer erhöhten Kraftstoffmenge.

Die erfindungsgemäße Motorsteuerungseinrichtung ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Diagramm zur Verdeutlichung eines aus der Praxis bekannten Verfahrens zum Starten eines Verbrennungsmotors; und
- Fig. 2: ein Diagramm zur Verdeutlichung eines erfindungsgemäßen Verfahrens zum Starten eines Verbrennungsmotors.

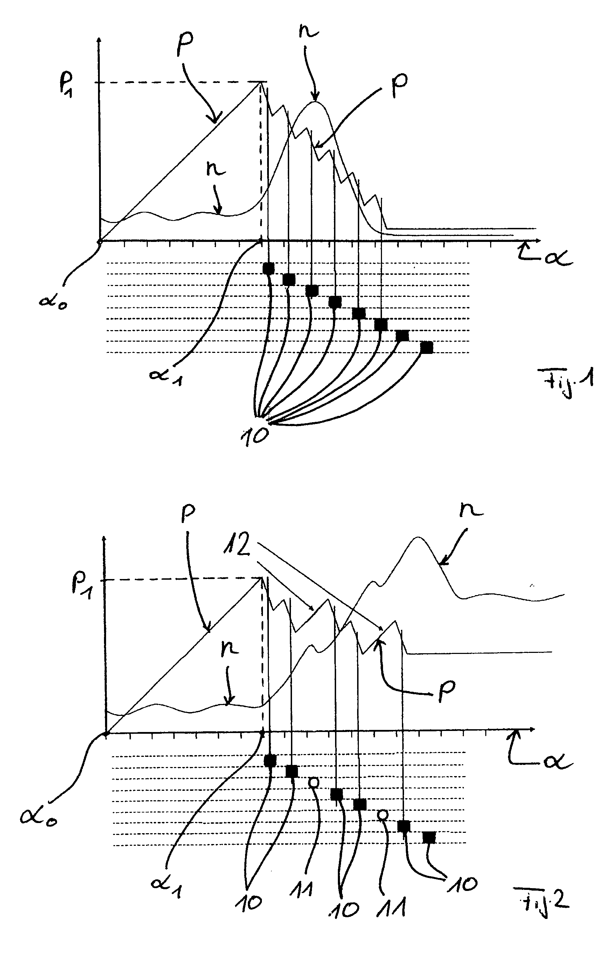

Bevor nachfolgend unter Bezugnahme auf Fig. 2 das erfindungsgemäße Verfahren zum Starten eines Verbrennungsmotors im Detail beschrieben wird, soll vorab unter Bezugnahme auf Fig. 1 die aus der Praxis bekannte Vorgehensweise zum Starten eines Verbrennungsmotors beschrieben werden.

So zeigt Fig. 1 ein Diagramm, in welchem als Funktion eines Kurbelwinkels α einerseits ein von einem Einspritzsystem bereitgestellter Einspritzdruck P und andererseits eine Drehzahl n des zu startenden Verbrennungsmotors dargestellt sind.

Nach Anliegen eines den Startvorgang des Verbrennungsmotors auslösenden Ereignisses zum Kurbelwinkel α₀ baut das Einspritzsystem des Verbrennungsmotors einen Einspritzdruck bzw. Kraftstoffdruck P kontinuierlich auf, bis zum Kurbelwinkel α₁ ein Freigabedruck P₁ vorliegt. Mit Erreichen des Freigabedrucks P₁ erfolgt sodann gemäß einer in einem Zylinder-Arbeitsspiel festgelegten Zylinderfolge das Einspritzen von Kraftstoff in die einzelnen Zylinder des Verbrennungsmotors, wobei gemäß Fig. 1 in der vom Zylinder-Arbeitsspiel vorgegebenen Reihenfolge in jeden der Zylinder des Verbrennungsmotors Kraftstoff eingespritzt wird.

Einspritzvorgänge sind in Fig. 1 durch Kästchen 10 dargestellt, wobei jedes der Kästchen 10 in Fig. 1 einem Einspritzvorgang in einen unterschiedlichen Zylinder des Verbrennungsmotors entspricht. Bei dem Verbrennungsmotor, auf welches sich das Diagramm der Fig. 1 bezieht, handelt es sich demnach um einen 8-Zylinder-Verbrennungsmotor.

Gemäß Fig. 1 nimmt bei jedem Einspritzvorgang 10 der Einspritzdruck P ab, wobei in Fig. 1 die Zeitspanne zwischen zwei aufeinander folgenden Einspritzvorgängen nicht ausreicht, um den durch einen Einspritzvorgang 10 bewirkten Druckabfall des Einspritzdrucks P zu kompensieren. Dies ist bei Verbrennungsmotoren mit Benzin-Direkteinspritzung insbesondere dann der Fall, wenn der Motor bei geringen Umgebungstemperaturen von insbesondere weniger als minus 20°C gestartet werden muss.

Dies hat im Diagramm der Fig. 1 zur Folge, dass bereits im ersten Zylinder-Arbeitsspiel des 8-Zylinder-Verbrennungsmotors, nämlich nach dem dritten Einspritzvorgang 10, der Einspritzdruck bzw. Kraftstoffdruck P soweit abgesunken ist, dass keine ausreichende Kraftstoffmenge in die Zylinder des Verbrennungsmotors eingespritzt werden kann, wodurch gemäß Fig. 1 die Drehzahl n des Verbrennungsmotors bereits nach dem dritten Einspritzvorgang im ersten Zylinder-Arbeitsspiel absinkt und nach dem sechsten Einspritzvorgang 10 der Verbrennungsmotor ausgeht.

Fig. 2 verdeutlicht an einem Diagramm das erfindungsgemäße Verfahren zum Starten eines Verbrennungsmotors, wobei auch in Fig. 2 wiederum als Funktion des Kurbelwinkels α einerseits ein Kraftstoffdruck bzw. Einspritzdruck P eines Einspritzsystems und andererseits eine Drehzahl n des Verbrennungsmotors dargestellt sind.

Nach Anliegen eines den Startvorgang des Verbrennungsmotors auslösenden Ereignisses zum Kurbelwinkel α₀ baut das Einspritzsystem des Verbrennungsmotors wiederum kontinuierlich den Einspritzdruck P auf, bis zum Kurbelwinkel α₁ der Freigabedruck P₁ erreicht ist. Gemäß Fig. 2 werden nach dem Anliegen des den Startvorgang auslösenden Ereignisses sowie nach dem Erreichen des Freigabedrucks P₁ zumindest während des ersten Zylinder-Arbeitsspiels des Verbrennungsmotors Einspritzungen in ausgewählte Zylinder des Verbrennungsmotors gezielt ausgelassen, wobei in Fig. 2 ausgeführte Einspritzungen durch Kästchen 10 und ausgelassene Einspritzungen durch Kreise 11 dargestellt sind. So werden im Ausführungsbeispiel der Fig. 2 Einspritzungen in die Zylinder des Verbrennungsmotors ausgelassen, in die nach dem Zylinder-Arbeitsspiel die dritte und sechste Einspritzung erfolgen würde.

Wie Fig. 2 entnommen werden kann, ist bedingt dadurch, dass die dritte und sechste Einspritzung im ersten Zylinder-Arbeitsspiel des Startvorgangs des Verbrennungsmotors ausgelassen wird, die Zeitspanne zwischen dem zweiten und vierten Einspritzvorgang sowie zwischen dem fünften und siebten Einspritzvorgang ausreichend groß, um den durch die Einspritzvorgänge verursachten Druckabfall im Einspritzdruck bzw. Kraftstoffdruck P zumindest soweit auszugleichen, dass in jedem Einspritzvorgang eine zum Starten des Verbrennungsmotors ausreichende Kraftstoffmenge im jeweils zur Verfügung stehenden Zeitfenster in die jeweiligen Zylinder des Verbrennungsmotors eingespritzt werden kann. Hierdurch kann sicher vermieden werden, dass der Verbrennungsmotor während des Startvorgangs aus geht.

Die Bereiche des Startvorgangs, in welchen bedingt durch ausgelassene Einspritzvorgänge 11 der durch tatsächlich ausgeführte Einspritzvorgänge 10 verursachte Druckabfall des Kraftstoffdrucks bzw. Einspritzdrucks P zumindest teilweise ausgeglichen werden kann, sind in Fig. 2 durch die Bezugsziffer 12 gekennzeichnet.

Das gezielte Auslassen von Einspritzvorgängen in Zylinder des Verbrennungsmotors während mindestens eines Zylinder-Arbeitsspiels nach dem Anliegen des den Startvorgang des Verbrennungsmotors auslösenden Ereignisses sowie nach dem Erreichen des Freigabedrucks erfolgt im Sinne der hier vorliegenden Erfindung nicht bei allen Betriebsbedingungen, sondern nur dann, wenn mindestens eine vorbestimmte Betriebsbedingung vorliegt.

Bei einer solchen Betriebsbedingungen kann es sich z. B. darum handeln, dass die Betriebstemperatur bzw. Umgebungstemperatur des Verbrennungsmotors, unter welcher derselbe gestartet werden soll, unterhalb eines vorbestimmten Grenzwerts liegt. Bei einer weiteren Betriebsbedingung, die zusätzlich oder alternativ zu der obigen Betriebsbedingungvorliegen kann, kann es sich darum handeln, dass ein Einspritzdruckgradient, mit welchem der Einspritzdruck P zwischen den Kurbelwinkeln α₀ und α₁ ansteigt, unterhalb eines vorbestimmten Grenzwerts liegt.

Im einfachsten Fall des erfindungsgemäßen Verfahrens wird nach dem Anliegen des den Startvorgang des Verbrennungsmotors auslösenden Ereignisses und bei Vorliegen einer bestimmten Betriebsbedingung ausschließlich während des ersten Zylinder-Arbeitsspiels eine Einspritzung in mindestens einen der Zylinder des Verbrennungsmotors ausgelassen, wohingegen in den sich anschließenden Zylinder-Arbeitsspielen in alle Zylinder Kraftstoff eingespritzt wird. Die beiden nachfolgenden Tabellen 1 und 2 zeigen mögliche Varianten für die Ausgestaltung des erfindungsgemäßen Verfahrens, in welcher lediglich während des ersten Zylinder-Arbeitsspiels eine Einspritzung in ausgewählte Zylinder des Verbrennungsmotors ausgelassen wird, wobei nach Tabelle 1 im ersten Zylinder-Arbeitsspiel die Einspritzung in den nach der Zylinderfolge dritten und sechsten Zylinder und nach Tabelle 2 die Einspritzung in den nach der Zylinderfolge vierten und achten Zylinder ausgelassen wird.

**Tabelle 1**

| Arbeitsspiel | 1 | | | | | | | | 2 | | | | | | | | 3 | | | | | | | |
|---|---|---|---|---|---|---|---|---|---|---|---|---|---|---|---|---|---|---|---|---|---|---|---|---|
| Zylinderfolge | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| Einspitzung | x | x | - | x | x | - | x | x | x | x | x | x | x | x | x | x | x | x | x | x | x | x | x | x |

**Tabelle 2**

| Arbeitsspiel | 1 | | | | | | | | 2 | | | | | | | | 3 | | | | | | | |
|---|---|---|---|---|---|---|---|---|---|---|---|---|---|---|---|---|---|---|---|---|---|---|---|---|
| Zylinderfolge | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| Einspitzung | x | x | x | - | x | x | x | - | x | x | x | x | x | x | x | x | x | x | x | x | x | x | x | x |

Gemäß den beiden nachfolgenden Tabellen 3 und 4 werden während der beiden ersten Zylinder-Arbeitsspiele Einspritzungen in Zylinder des Verbrennungsmotors gezielt ausgelassen, wobei nach Tabelle 3 im ersten Arbeitsspiel die Einspritzung in den nach der Zylinderfolge dritten und sechsten Zylinder und während des zweiten Zylinder-Arbeitsspiels in den nach der Zylinderfolge ersten, vierten und siebten Zylinder ausgelassen wird. In der Variante der Tabelle 4 wird während des ersten Arbeitsspiels die Einspritzung in den nach der Zylinderfolge dritten, fünften und siebten Zylinder und während des zweiten Zylinder-Arbeitsspiels in den nach der Zylinderfolge ersten Zylinder ausgelassen. Daraus folgt, dass für solche Zylinder, für die während eines Zylinder-Arbeitsspiels eine Einspritzung ausgelassen wird, im sich unmittelbar anschließenden Zylinder-Arbeitsspiel eine Einspritzung vorgenommen wird.

**Tabelle 3**

| Arbeitsspiel | 1 | | | | | | | | 2 | | | | | | | | 3 | | | | | | | |
|---|---|---|---|---|---|---|---|---|---|---|---|---|---|---|---|---|---|---|---|---|---|---|---|---|
| Zylinderfolge | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| Einspitzung | x | x | - | x | x | - | x | x | - | x | x | - | x | x | - | x | x | x | x | x | x | x | x | x |

**Tabelle 4**

| Arbeitsspiel | 1 | | | | | | | | 2 | | | | | | | | 3 | | | | | | | |
|---|---|---|---|---|---|---|---|---|---|---|---|---|---|---|---|---|---|---|---|---|---|---|---|---|
| Zylinderfolge | 1 | 2 | 3 | 4 | 5 | 6 | 7 | 8 | 1 | 2 | 3 | 4 | 5 | 6 | 7 | 8 | 1 | 2 | 3 | 4 | 5 | 6 | 7 | 8 |
| Einspitzung | x | x | - | x | - | x | - | x | - | x | x | x | x | x | x | x | x | x | x | x | x | x | x | x |

Im Sinne der hier vorliegenden Erfindung kann die Anzahl der Zylinder, in die im Sinne des erfindungsgemäßen Verfahrens eines Einspritzung während eines Zylinder-Arbeitsspiels vorgenommen bzw. für die eine Einspritzung ausgelassen wird, frei gewählt werden. Weiterhin kann die Reihenfolge der Zylinder, in welche die Einspritzung vorgenommen und für die eine Einspritzung ausgelassen wird, frei gewählt werden. Ebenso ist es im Sinne der hier vorliegenden Erfindung möglich, die Kraftstoffmenge, die in die Zylinder, in die eine Einspritzung vorgenommen wird, frei zu wählen.

Dabei wird vorzugsweise so vorgegangen, dass in solche Zylinder, für die während eines Zylinder-Arbeitsspiels eine Einspritzung ausgelassen wird, im sich unmittelbar anschließenden Zylinder-Arbeitsspiel eine Einspritzung mit einer erhöhten Kraftstoffmenge vorgenommen wird.

Im Fall der Tabelle 3 würde dies bedeuten, dass im zweiten Arbeitsspiel in die nach der Zylinderfolge dritten und sechsten Zylinder, für die im ersten Zylinder-Arbeitsspiel eine Einspritzung ausgelassen wurde, eine Einspritzung mit einer erhöhten Kraftstoffmenge vorgenommen wird. Ebenso würde dann im dritten Zylinder-Arbeitsspiel für die nach der Zylinderfolge ersten, vierten und siebten Zylinder eine Einspritzung mit einer erhöhten Kraftstoffmenge vorgenommen.

Nach einer vorteilhaften Weiterbildung kann vorgesehen sein, dass die Anzahl und/oder Reihenfolge der Zylinder, in die eine Einspritzung vorgenommen bzw. für die eine Einspritzung ausgelassen wird, und/oder die einzuspritzende Einspritzmenge für solche Zylinder, in die eine Einspritzung vorgenommen wird, abhängig von der oder jeder vorbestimmten Betriebsbedingung bestimmt wird, bei Vorliegen derer das erfindungsgemäße Verfahren ausgeführt wird. So kann z. B. vorgesehen werden, dass dann, wenn das erfindungsgemäße Verfahren aufgrund des Unterschreitens eines Grenzwerts für die Umgebungstemperatur ausgeführt wird, dasselbe gemäß Tabelle 3 ausgeführt wird. Weiterhin kann vorgesehen sein, dass dann, wenn das erfindungsgemäße Verfahren aufgrund des Unterschreitens eines Grenzwerts für den Einspritzdruckgradienten ausgeführt wird, dasselbe nach Tabelle 4 durchgeführt wird.

### Bezugszeichenliste

- 10: ausgeführte Einspritzung
- 11: ausgelassene Einspritzung
- 12: Bereich

## Patentansprüche

1. Verfahren zum Starten eines Verbrennungsmotors mit Direkteinspritzung des Kraftstoffs, wobei nach dem Anliegen eines den Startvorgang des Verbrennungsmotors auslösenden Ereignisses und bei Vorliegen mindestens einer vorbestimmten Betriebsbedingung während mindestens eines Zylinder-Arbeitsspiels des Verbrennungsmotors eine Einspritzung in mindestens einen der Zylinder gezielt ausgelassen wird.

2. Verfahren nach Anspruch 1, **dadurch gekennzeichnet, dass** nach dem Anliegen des den Startvorgang des Verbrennungsmotors auslösenden Ereignisses und bei Vorliegen der oder jeder vorbestimmten Betriebsbedingung ausschließlich während eines Zylinder-Arbeitsspiels eine Einspritzung in mindestens einen der Zylinder ausgelassen wird.

3. Verfahren nach Anspruch 1, **dadurch gekennzeichnet, dass** nach dem Anliegen des den Startvorgang des Verbrennungsmotors auslösenden Ereignisses und bei Vorliegen der oder jeder vorbestimmten Betriebsbedingung während mindestens zwei hintereinander folgender Zylinder-Arbeitsspiele eine Einspritzung in mindestens einen der Zylinder ausgelassen wird.

4. Verfahren nach Anspruch 3, **dadurch gekennzeichnet, dass** hierbei für solche Zylinder, für die während eines Zylinder-Arbeitsspiels eine Einspritzung ausgelassen wird, im sich unmittelbar anschließenden Zylinder-Arbeitsspiel eine Einspritzung vorgenommen wird.

5. Verfahren nach einem oder mehreren der Ansprüche 1 bis 4, **dadurch gekennzeichnet, dass** in solche Zylinder, für die während eines Zylinder-Arbeitsspiels eine Einspritzung ausgelassen wird, im sich unmittelbar anschließenden Zylinder-Arbeitsspiel eine Einspritzung mit einer erhöhten Kraftstoffmenge vorgenommen wird.

6. Verfahren nach einem oder mehreren der Ansprüche 1 bis 5, **dadurch gekennzeichnet, dass** die Anzahl und Reihenfolge der Zylinder, in die eine Einspritzung vorgenommen wird bzw. für die eine Einspritzung ausgelassen wird, frei wählbar ist.

7. Verfahren nach einem oder mehreren der Ansprüche 1 bis 6, **dadurch gekennzeichnet, dass** die einzuspritzende Kraftstoffmenge für solche Zylinder, in die eine Einspritzung vorgenommen wird, frei wählbar ist.

8. Verfahren nach einem oder mehreren der Ansprüche 1 bis 7, **dadurch gekennzeichnet, dass** als Betriebsbedingung, bei deren Vorliegen während mindestens eines Zylinderarbeitsspiels Einspritzungen in einige der Zylinder gezielt ausgelassen werden, das Vorliegen einer unterhalb eines Grenzwerts liegenden Umgebungstemperatur vorbestimmt wird.

9. Verfahren nach einem oder mehreren der Ansprüche 1 bis 8, **dadurch gekennzeichnet, dass** als Betriebsbedingung, bei deren Vorliegen während mindestens eines Zylinderarbeitsspiels Einspritzungen in einige der Zylinder gezielt ausgelassen werden, das Vorliegen eines unterhalb eines Grenzwerts liegenden Einspritzdruckgradienten vorbestimmt wird.

10. Verfahren nach einem oder mehreren der Ansprüche 1 bis 9, **dadurch gekennzeichnet, dass** die Anzahl und/oder Reihenfolge der Zylinder, in die eine Einspritzung vorgenommen wird bzw. für die eine Einspritzung ausgelassen wird, und/oder die einzuspritzende Kraftstoffmenge für solche Zylinder, in die eine Einspritzung vorgenommen wird, abhängig von der oder jeder vorbestimmten Betriebsbedingung bestimmt wird.

11. Motorsteuerungseinrichtung für einen Verbrennungsmotors mit Direkteinspritzung des Kraftstoffs, wobei die Motorsteuerungseinrichtung nach dem Anliegen eines den Startvorgang des Verbrennungsmotors auslösenden Ereignisses und bei Vorliegen mindestens einer vorbestimmten Betriebsbedingung während mindestens eines Zylinder-Arbeitsspiels des Verbrennungsmotors Einspritzungen in einige der Zylinder gezielt auslässt.

12. Motorsteuerungseinrichtung nach Anspruch 10, **gekennzeichnet durch** Mittel zur Ausführung des Verfahrens nach einem oder mehreren der Ansprüche 1 bis 11.
